Europäisches Patentamt

European Patent Office

Office européen des brevets

(19)

(11) Veröffentlichungsnummer : **0 029 860**
**B1**

## (12) EUROPÄISCHE PATENTSCHRIFT

(45) Veröffentlichungstag der Patentschrift :
26.09.84

(21) Anmeldenummer : 79104765.7

(22) Anmeldetag : 29.11.79

(51) Int. Cl.³ : **A 61 C   1/08**

(54) **Zahnärztliches Handstück.**

(43) Veröffentlichungstag der Anmeldung :
10.06.81 Patentblatt 81/23

(45) Bekanntmachung des Hinweises auf die Patenterteilung : 26.09.84 Patentblatt 84/39

(84) Benannte Vertragsstaaten :
AT CH DE FR GB IT SE

(56) Entgegenhaltungen :
DE-A- 2 653 588
DE-A- 2 741 148
DE-A- 2 802 325
DE-C-   547 619
DE-C-   836 988

(73) Patentinhaber : **Siemens Aktiengesellschaft**
**Berlin und München Wittelsbacherplatz 2**
**D-8000 München 2 (DE)**

(72) Erfinder : **Schuss, Werner**
**In der Lahrbach 18**
**D-6148 Heppenheim (DE)**
Erfinder : **Fleer, Ernst Otto**
**Friedrich-Ebert-Strasse 35**
**D-6140 Bensheim-Auerbach (DE)**

## Beschreibung

Die Erfindung bezieht sich auf ein zahnärztliches Handstück mit einem Kopfteil zur Aufnahme von Triebwellenabschnitten zum Antrieb eines in einem Kopfgehäuse des Kopfteils drehbar zu halternden Werkzeuges und einer mit dem Kopfteil lösbar verbundenen, ebenfalls wenigstens einen Triebwellenabschnitt aufweisenden Griffhülse, mit Kühlmittelleitungsabschnitten für wenigstens ein Kühlmedium in beiden Handstückteilen mit axialer Steckverbindung und Dichtungsmitteln zwischen den Kühlmittelleitungsabschnitten und einem am einen Handstückteil angeordneten, axial sich erstreckenden Führungsansatz, der in eine Schlitzführung am anderen Handstückteil eingreift und dort einen Anschlag gegen Verdrehung der beiden Handstückteile bildet.

Bei einer bekannten Handstückkonstruktion (DE-A1-28 02 325) enthalten die miteinander zu verbindenden Handstückteile einerseits eine geschlitzte Hülse und diametral versetzt dazu angeordnete Ausnehmungen am Umfang des einen Handstückteils und andererseits einen Dorn am anderen Handstückteil, der wiederum einen in den Schlitz passenden Vorsprung aufweist. Hülse und Dorn weisen elastisch verformbare Teile auf, die nach axialem Einschieben des Dorns in den Hülsenschlitz bei anschließender Verdrehung der beiden Handstückteile um ihre Längsachse den Dornvorsprung in die Hülsenausnehmung einrasten lassen und darin verriegelt halten. Die Verbindung und Abdichtung der beiden Kühlmittelleitungsenden an der Kupplungsstelle erfolgt über eine Ringdichtung zwischen den aneinanderstoßenden Stirnflächen der beiden Handstückteile, wobei die Höhe oder axiale Länge dieser Ringdichtung etwas größer ist als die axiale Tiefe der Ausbohrung, in der die Ringdichtung eingelegt ist, so daß im nicht gekuppelten Zustand die Ringdichtung über die eine Stirnfläche etwas vorsteht und im gekuppelten Zustand eine Plandichtung mit einer bestimmten Flächenpressung erzielt wird.

Damit eine dichte Verbindung der Kühlmittelleitungsabschnitte gewährleistet ist, muß eine relativ große Flächenpressung erzeugt werden, was letztlich dazu führt, daß die bajonettartige Verbindung der beiden Handstückteile relativ schwergängig ist. Nachdem die Dichtung praktisch bei jedem An- und Abkuppelvorgang auf Scherung bzw. Torsion beansprucht wird, tritt bei dieser Konstruktion außerdem ein relativ großer Verschleiß an Dichtungen auf.

Aus der DE-A1-27 41 148 ist ein zahnärztliches Handstück bekannt, welches unter Bildung einer eine Aufnahme für ein antreibbares Behandlungswerkzeug aufweisenden Vorderhülse und einer mittels eines drehbaren Festziehringes lösbar mit dieser verbundenen Griffhülse quergeteilt ist, wobei das Handstück eine im Bereich der Querteilung im Hülseninnern verlaufende, ebenfalls quergeteilte Kühlmittelleitung aufweist.

Von den beiden einander zugekehrten Stirnseiten von Vorderhülse und Griffhülse weist die eine Stirnseite einen vorstehenden Anschlußstutzen auf, der im montierten Zustand in eine Anschlußbuchse in der anderen Stirnseite eingreift. Damit die Anschlußstutzen und die Anschlußbuchsen der Kühlmittelleitungen vor seitlichen bzw. Radialkräften bewahrt sind, sind an den einander zugekehrten Stirnseiten zusätzliche, federnd und, bezogen auf die Handstückachse, axial in Gegeneingriffsmittel eingreifbare Eingriffsmittel in Form von z. B. Klemmbacken im einen und entsprechend ausgebildeten Ausnehmungen im anderen Handstückteil vorhanden. Durch diese Maßnahme soll beim Verdrehen des Festziehringes, der die beiden Handstückteile stirnseitig zusammenpreßt, den auftretenden Drehmomenten hinreichender Widerstand gegen Verdrehung gegeben werden. Außerdem soll damit verhindert werden, daß auf die Anschlußstutzen bzw. Anschlußbuchsen Seitenkräfte wirken können, durch die die relativ dünnen Rohrstutzen verbogen werden können.

Durch das stumpfe Aneinanderpressen der Stirnflächen von Vorderhülse und Griffhülse ist keine gute Führung gegeben, die gerade wegen des relativ häufigen Wechsels der Vorderhülse unerläßlich ist. Als nachteilig ist weiterhin anzusehen, daß sowohl die Leitungsenden als auch die zur Verdrehsicherung und zum Schutz vor seitlichen bzw. Radialkräften der Leitungsenden vorgesehenen (zusätzlichen) Maßnahmen in Form der federnden Klemmbacken im abgenommenen Zustand von Vorderhülse und Griffhülse vorstehende Teile bilden, die die Gefahr einer Verletzung an diesen Teilen und Beschädigung dieser Teile in sich bergen.

Dies trifft auch für ein aus der DE-C-836 988 bekanntes zahnärztliches Handstück zu, an dessen hinterem Ende ein mit einem Schlitz und einer Kerbe versehenes Kupplungsteil angeordnet ist, welches in ein entsprechend ausgebildetes Gegenkupplungsteil einer Bohrmaschine, auf die das Handstück aufsteckbar ist, eingreift und bei dem das ebenfalls vorstehende Ende eines außen am Handstück entlang verlaufenden Kühlmittelleitungsabschnittes in einen entsprechend ausgebildeten Luftdurchlaß eingreift, wenn das Handstück mit der Bohrmaschine verbunden wird.

Aufgabe der vorliegenden Erfindung ist es, ein Handstück der eingangs genannten Gattung dahingehend zu verbessern, daß die Verbindung zwischen Kopfteil und Griffhülse für den Benutzer leicht und mit sicherer Führung sowohl in axialer Richtung als auch gegen Verdrehung, unter Vermeidung von vorstehenden Teilen, herzustellen ist und daß ferner ein wirksamer Schutz der relativ dünnen und daher empfindlichen Kühlmittelleitungsenden gewährleistet ist.

Zur Lösung der gestellten Aufgabe wird bei einem Handstück der eingangs genannten

Gattung erfindungsgemäß vorgeschlagen, daß der Führungsansatz an einem zylindrischen Schaft des Kopfteils angeordnet ist, welcher in eine dazu passende Führung der Griffhülse eingreift, daß im Führungsansatz die Leitungskanäle der Kühlmittelleitungsabschnitte des Kopfteils integriert sind und dort Steckbuchsen bilden, in die Rohrstutzen der Kühlmittelleitungsabschnitte der Griffhülse beim Aufstecken des Kopfteils im Sinne einer Leitungsverbindung eingreifen, und daß die Griffhülse einerseits einen Führungsschlitz für den Führungsansatz und andererseits Ausnehmungen für den Eingriff von am Kopfteil angeordneten Rastmitteln enthält.

Ein wesentlicher Vorteil der erfindungsgemäßen Konstruktion ist, daß der Führungsansatz zur Verdrehsicherung gleichsam zur Aufnahme des einen Kühlmittelleitungsabschnittes dient, wodurch die beiden Handstückteile zum An- und Abkuppeln nicht gegeneinander verdreht zu werden brauchen, hierzu vielmehr ein axiales Abziehen bzw. Aufstecken des einen Handstückteils auf das andere genügt, wobei mit dem Aufstecken bzw. Abziehen der Handstückteile gleichzeitig die Verbindung der Kühlmittelleitungsabschnitte der beiden Handstückteile hergestellt bzw. gelöst wird, wobei im getrennten Zustand an der Trennstelle keine vorstehenden Leitungsenden vorhanden sind.

Vorteilhafte Ausgestaltungen und Weiterbildungen sind in den Unteransprüchen enthalten. Ein Ausführungsbeispiel der Erfindung wird nachstehend anhand der Figuren näher erläutert. Es zeigen:

Figur 1 ein zahnärztliches Handstück komplett mit Antriebsteil,

Figur 2 Einzelteile des Handstückes nach Figur 1 in einer Explosionsdarstellung.

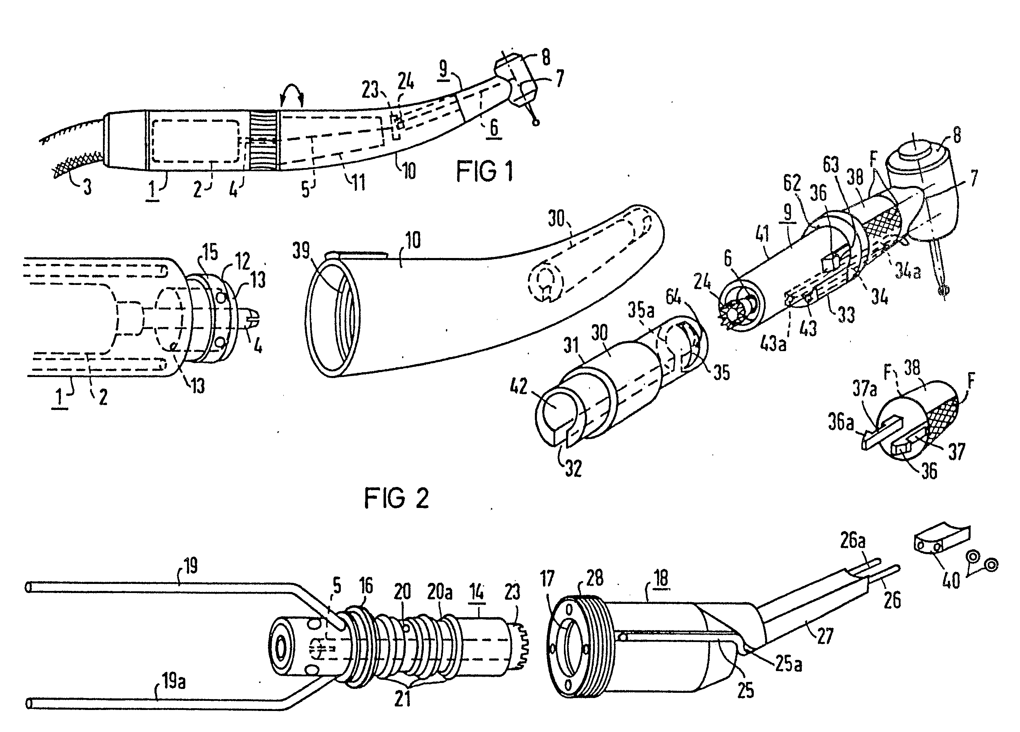

Die Fig. 1 zeigt ein zahnärztliches Handstück mit einem Antriebsteil 1, der einen mit 2 bezeichneten Antriebsmotor (Elektromotor) enthält, dem über einen Versorgungsschlauch 3 Antriebsenergie zugeführt wird. An die Antriebswelle 4 des Elektromotors schließen sich in der Figur schematisch eingezeichnete Triebwellenabschnitte 5, 6, 7 an, über die in bekannter Weise ein in einem Kopfgehäuse 8 des Handstückes drehbar gelagertes, nicht näher bezeichnetes Werkzeug angetrieben wird. Das Kopfgehäuse 8 ist Teil eines mit 9 bezeichneten Kopfteiles, welches die beiden Triebwellenabschnitte 6 und 7 sowie deren Lager aufnimmt und welches abnehmbar an einer Handstückgriffhülse 10 gehaltert ist. Die Handstückgriffhülse 10 umschließt eine mit 11 bezeichnete, aus zwei konzentrischen Hülsen bestehende Lagereinheit, die den Triebwellenabschnitt 5 sowie ein Drehlager zur Übertragung einer oder mehrerer Kühlmedien vom Antriebsteil 1 auf das Kopfteil 9 enthält. Die Handstückhülse 10 ist zusammen mit dem Kopfteil 9 und eine später noch näher bezeichnete Hülse der Lagereinheit 11 gegen das Antriebsteil 1 um die Handstücklängsachse drehbar (Pfeil).

Das Antriebsteil 1 enthält (Fig. 2) einen zylindrischen Absatz 12 mit einer in der Darstellung gestrichelt angedeuteten Eindrehung 13, in die im montierten Zustand das eine (in der Figur linke) Ende einer Hülse 14 eingreift. Auf den Absatz 12 ist ferner eine Kugelrastung 15 zur axialen Fixierung der Hülse 14 aufgesetzt. Die Hülse 14 enthält ferner einen in einer Nut eingelegten Federring 16, der im montierten Zustand in eine Ringnut 17 der Hülse 18 eingreift, die zusammen mit der Hülse 14 die Lagereinheit 11 bilden. An der Hülse 14 sind zwei Kühlmittelleitungen 19, 19a befestigt, deren eine Enden in bekannter Weise über radiale Bohrungen in Ringkanäle 20, 20a münden, welche durch Dichtungsringe 21 gegeneinander abgedichtet sind. Die Hülse 14 nimmt ferner noch den Triebwellenabschnitt 5 auf, der der Antriebsseite abgewandt ein Triebzahnrad 23 enthält, das im montierten Zustand mit einem Zahnrad 24 des Triebwellenabschnittes 6 kämmt. Die an der Hülse 14 vorstehenden Leitungsenden der Leitungsabschnitte 19, 19a greifen im montierten Zustand in nicht näher bezeichnete Längsnuten des Antriebsgehäuses 1 ein und sind mit im Versorgungsschlauch 3 geführten Zuführungsleitungen verbunden.

Die Hülse 18 ist im montierten Zustand konzentrisch zur Hülse 14 angeordnet und enthält Kühlmittelleitungsabschnitte 25, 25a, welche wiederum in bekannter Weise die Kühlmittel aus den Ringkanälen 20, 20a übernehmen. Die Kühlmittelleitungsabschnitte 25, 25a weisen Rohrstutzen 26, 26a auf, welche in einem schräg verlaufenden Fortsatz 27 der Hülse 18 gehaltert sind. Die Hülse 18 enthält ferner einen die Ringnut 17 für das Eingreifen des Federringes 16 enthaltenden Schraubring 28, mit dem die Hülse 18 in der Handstückhülse 10 axial festgelegt werden kann.

Mit 30 ist eine federnde, geschlitzte Führungsbuchse bezeichnet, die mit Vorspannung in der handstückhülse 10 eingeklemmt ist (siehe strichpunktierte Darstellung). Hierzu enthält die Hülse 10 eine entsprechende Eindrehung, in die ein Bund 31 der Führungsbuchse 30 einschnappt. Die Führungsbuchse 30 ist so in der Handstückhülse 10 gegen axiales Abgleiten gesichert. Die Führungsbuchse 30 ist ferner mit einem durchgehenden Längsschlitz 32 versehen, in den einerseits der Fortsatz 27 der Hülse 18 und andererseits ein längsverlaufender Ansatz 33 des Kopfteils 9 eingreift, der Kühlmittelleitungsabschnitte 34, 34a aufnimmt, die im Bereich des Kopfgehäuses 8 in eine gemeinsame Kühlmittelaustrittsdüse münden.

Die Führungsbuchse 30, die als Verdrehsicherung einerseits des Teils 18 und andererseits des Kopfteils 9 dient, enthält weiterhin zwei beidseitig am Umfang angeordnete Rastschlitze 35, 35a, in die radial federnde Rastnasen 36, 36a eingreifen, wenn das Kopfteil 9 auf der Handstückhülse axial aufgeschoben wird. Die beiden Rastnasen 36, 36a sind mittels achsparallel verlaufender Stege 37, 37a auf einer Federhülse 38 befestigt. Die Federhülse 38 ist sehr dünnwandig ausgebildet und am Kopfteil 9 so angeordnet, daß sie eine äußere Mantelfläche bildet. Bei radialem Druck auf die Hülse 38, z. B. durch Daumen und Zeigefinger einer Hand, bewegen sich die beiden Rastnasen 36, 36a radial nach innen, wodurch diese mit den Schlitzen 35, 35a außer Eingriff kommen.

Die Stege 37 brauchen nicht unbedingt fest an der Betätigungshülse 38 angeordnet zu sein ; denkbar und im Rahmen der Erfindung ist auch eine Konstruktion, bei der die Stege lediglich kraftschlüssig, z. B. in einer Führungsnut der Hülse eingelegt, mit der Hülse 38 verbunden sind. Auch hinsichtlich der Anzahl der vorgesehenen Rastnasen sind Abweichungen vom dargestellten Ausführungsbeispiel möglich, ohne jedoch den Rahmen der Erfindung zu verlassen. Die Anordnung von zwei diametral einander gegenüberliegenden Rastnasen ist zwar besonders vorteilhaft ; für bestimmte Zwecke ist es jedoch auch denkbar, nur eine Rastnase oder drei bzw. vier Rastnasen vorzusehen.

Im Rahmen der Erfindung liegt auch eine Ausführungsform, bei der die federnde Hülse mit ein oder mehreren Ausnehmungen am Umfang versehen ist und die Stege mit den Rastnasen am anderen Handstückteil angeordnet sind.

Zur Montage des Handstückes wird zunächst die Hülse 30 in der Handstückhülse 10 eingeklemmt. Der Ansatz 31, der in einer entsprechenden Eindrehung der Handstückhülse 10 einrastet, verhindert ein axiales Verstellen der Hülse. Danach wird die Hülse 18 in die Handstückhülse 10 eingeschoben ; der Fortsatz 27 greift dabei in den Längsschlitz 32 der Buchse 30 ein. Mittels des mit einem Außengewinde versehenen Schraubringes 28 wird die Hülse 18 in der Handstückhülse 10 axial fixiert, wozu diese mit einem Innengewinde 39 versehen ist.

Die Hülse 14 ist, wie bereits erwähnt, mittels der Kugelrastvorrichtung 15 am Antriebsteil 1 verdrehsicher und axial nicht betriebsmäßig lösbar befestigt. Die Handstückhülse 10 mit der darin gehaltenen Führungsbuchse 30 und der Hülse 18 mit den Kühlmittelleitungen 25, 25a kann nun axial auf die Hülse 14 so weit aufgeschoben werden, bis der Federring 16 in die Nut 17 einrastet und die Handstückhülse somit axial fixiert werden.

Auf die beiden Rohrstutzen 26, 26a wird eine aus ein oder mehreren Elementen bestehende elastische Dichtung 40 aufgeschoben. Die Dichtung ist so ausgebildet, daß sie auf den beiden Rohrstutzen 26, 26a eng anliegt. Das Kopfteil 9 tritt mit einem Schaft- oder Halsteil 41 in die Öffnung 42 der Hülse 30 ein. Der Führungsansatz 33, der zur besseren Zentrierung ein sich zum Antriebsteil hin verjüngendes Ende aufweisen kann, greift nach einem bestimmten Einschubweg in die Schlitzführung 32 ein. Das Kopfteil 9 ist so gegen Verdrehung gesichert. Bei weiterem Einführen des Kopfteils 9 in die Handstückhülse 10 kommen schließlich die Leitungskanäle 43, 43a der Kühlmittelleitungsabschnitte 34, 34a in Eingriff mit den Rohrstutzen 26, 26a. Ein erster Anschlag 62, der die axiale Einfuhrtiefe des Schaftes 41 des Kopfteils 9 begrenzt, kann an geeigneter Stelle vorgesehen sein. Bei Erreichen des Anschlages 62 sind die Rastnasen 36, 36a mit den beiden Rastschlitzen 35, 35a in Eingriff, wodurch das Kopfteil 9 zunächst axial gegenüber der Handstückhülse 10 fixiert ist. Die Dichtung 40 gewährleistet in dieser Raststellunh eine dichte Verbindung der Kühlmittelleitungsabschnitte 25, 34.

Die Dichtung 40 hat noch eine weitere Funktion zu erfüllen ; sie soll nämlich für eine in axialer Richtung definierte Eingriffslage der beiden Zahnräder 23, 24 sorgen. Zu diesem Zweck stehen die beiden Rastnasen 36, 36a mit geringem Axialspiel mit den Rastschlitzen 35, 35a in Eingriff. Die Vorspannkraft der Dichtung 40, welche durch das Zusammenkuppeln der Handstückteile erzeugt wird, versucht, das Kopfteil 9 von der Griffhülse 10 wegzudrücken. Dabei ergibt sich eine in axialer Richtung eindeutige Positionierung der Handstückteile durch Anschlag der Kanten 63 der Rastnasen 36, 36a an den Kanten 64 der Rastschlitze 35, 35a. In dieser Position ist selbstverständlich der Anschlag an der Stelle 62 wieder aufgehoben.

Anstelle der elastischen Dichtung 40 kann z. B. auch ein quer zum Schlitz 34 eingelegter Federdraht, ein Federband od. dgl., vorgesehen werden, gegen den die Stirnfläche des Führungsansatzes 33 oder Teile davon anliegen. Auch hier sorgt das axial wirkende Druckmittel dafür, daß in gekuppeltem Zustand der Handstückteile eine in axialer Richtung stets definierte, gleichbleibende Eingriffsposition der Triebzahnräder 23, 24 gegeben ist.

Zum Lösen des Kopfteils 9 wird die Federhülse 38 in dem in der Darstellung mit F bezeichneten Flächenbereich, in dem sich die Rastnasen-Schlitzverbindung befindet, radial leicht zusammengedrückt. Durch das Zusammendrücken, das zweckmäßigerweise mit Daumen und Zeigefinger erfolgen kann, verformt sich die Federhülse, wodurch die Rastnasen-Schlitzverbindung 35, 36 außer Eingriff kommt. Die Anordnung der Rastverbindung in dem gezeigten Bereich erlaubt ein gefahrloses An- und Abkuppeln der Handstückteile, weil das Kopfteil praktisch nur an den Seitenflanken, also in dem Flächenbereich, der in das Kopfgehäuse tangierend übergeht, angefaßt zu werden braucht.

**Ansprüche**

1. Zahnärztliches Handstück mit einem Kopfteil (9) zur Aufnahme von Triebwellenabschnitten (6, 7) zum Antrieb eines in einem Kopfgehäuse (8) des Kopfteils drehbar zu halternden Werkzeuges und einer mit dem Kopfteil (9) lösbar verbundenen, ebenfalls wenigstens einen Triebwellenabschnitt (4, 5) aufweisenden Griffhülse (10), mit Kühlmittelleitungsabschnitten (25, 25a ; 43, 43a) für wenigstens ein Kühlmedium in beiden Handstückteilen (9, 10), mit axialer Steckverbindung und Dichtungsmitteln (40) zwischen den Kühlmittelleitungsabschnitten (25, 25a ; 43, 43a) und einem am einen Handstückteil (9) angeordneten, axial sich erstreckenden Führungsansatz (33), der in eine Schlitzführung (32) am anderen Handstückteil (10) eingreift und dort einen Anschlag gegen Verdrehung der beiden Handstückteile (9, 10) bildet, dadurch gekennzeichnet, daß der Führungsansatz (33) an einem zylindrischen Schaft (41) des Kopfteils (9) angeordnet ist, welcher in eine dazu passende Führung (42) der Griffhülse (10) eingreift, daß im Führungsansatz (33) die Leitungskanäle (43, 43a) der Kühlmittelleitungsabschnitte (34) des Kopfteils (9) integriert sind und dort Steckbuchsen bilden, in die Rohrstutzen (26, 26a) der Kühlmittelleitungsabschnitte (25, 25a) der Griffhülse (10, 18) beim Aufstecken des Kopfteils (9) im Sinne einer Leitungsverbindung eingreifen, und daß die Griffhülse (10) einerseits einen Führungsschlitz (32) für den Führungsansatz (33) und andererseits Ausnehmungen (35) für den Eingriff von am Kopfteil (9) angeordneten Rastmitteln (36, 37) enthält.

2. Handstück nach Anspruch 1, dadurch gekennzeichnet, daß der Führungsansatz (33) zu seinem freien Ende hin verjüngt ausgebildet und/oder die ihn aufnehmende Schlitzführung (32) am Einführungsende erweitert ausgebildet ist.

3. Handstück nach Anspruch 1 oder 2, dadurch gekennzeichnet, daß die Griffhülse (10) eine den Führungsschlitz (32) und die Ausnehmungen (35) beinhaltende Führungsbuchse (30) enthält, die radial federnd ausgebildet ist und einen Bund (31) enthält, der in eine entsprechend ausgebildete Ausdrehung in der Griffhülse (10) einrastet und dort mit radialer Vorspannung anliegt und so ein axiales Verschieben der Führungsbuchse (30) verhindert.

4. Handstück nach Anspruch 3, dadurch gekennzeichnet, daß in der Griffhülse (10) ein weiteres hülsenförmiges Teil (18) verdrehsicher gehaltert ist, welches den Kühlmittelleitungsabschnitt (25, 25a) mit den in den Leitungskanal (43) des anderen Kühlmittelleitungsabschnittes (34) eingreifenden Rohrstutzen (26, 26a) enthält.

5. Zahnärztliches Handstück nach Anspruch 4, dadurch gekennzeichnet, daß auf den Rohrstutzen (26, 26a) elastische Druckmittel (40) aufsetzbar sind, die in der Eingriffsposition zur Gewährleistung einer exakten Positionierung des Zahneingriffes (23, 24) der Getriebeverbindung der beim Ankuppeln der beiden Handstückteile (9, 10) miteinander kuppelbaren Triebwellenabschnitte (5, 6) die Handstückteile (9, 10) axial gegen einen Anschlag (63, 64) drücken.

6. Handstück nach Anspruch 5, dadurch gekennzeichnet, daß die Druckmittel (40) auch Dichtmittel sind.

7. Handstück nach Anspruch 4, dadurch gekennzeichnet, daß als Druckmittel ein quer zur Längsrichtung des Führungsansatzes (33) verlaufender, aber in Längsrichtung defernder Draht od. dgl. angeordnet ist, an dem die Stirnfläche des Führungsansatzes (33) oder Teile davon anliegen und der in der Eingriffsposition zur Gewährleistung einer exakten Positionierung des Zahneingriffes (23, 24) der Getriebeverbindung der beim Ankuppeln der beiden Handstückteile (9, 10) miteinander kuppelbaren Triebwellenabschnitte (5, 6) die handstückteile (9, 10) axial gegen einen Anschlag (63, 64) drückt.

8. Handstück nach einem der Ansprüche 1 bis 7, dadurch gekennzeichnet, daß am Kopfteil (9) eine radial federnde Betätigungshülse (38) angeordnet ist, an der seitliche, achsparallel verlaufende Stege (37, 37a) befestigt sind, die in die zylindrische Führung (42) eintauchen und mit an den freien Enden angeordneten Rastnasen (36, 36a) in die Ausnehmungen (35, 35a) der Handstückhülse (10) federnd eingreifen.

**Claims**

1. A dental handpiece having a head part (9) which accommodates drive shaft sections (6, 7) which serve to drive a tool which is to be rotatably supported, in a head housing (8) of the head part, and a gripping sleeve (10) which is detachably connected to the head part (9), is similarly provided with at least one drive shaft section (4, 5) and has coolant line sections (25, 25a ; 43, 43a) for at least one coolant in both the handpiece parts (9, 10) ; having an axial plug-in connection and sealing means (40) between the coolant line sections (25, 25a ; 43, 43a) ; and having a guide attachment (33) which is arranged on the first handpiece part (9), extends in the axial direction, and engages into a slotted guide (32) of the other handpiece part (10) where it forms a stop means which prevents rotation of the two manual tool components (9, 10), characterised in that the guide attachment (33) is arranged on a cylindrical shaft (41) of the head part (9) which engages into a matching guide (42) of the gripping sleeve (10) ; that the line channels (43, 43a) of the coolant line sections (34) of the head part (9) are integrated in the guide attachment (33), where they form sockets into which tube elements (26, 26a) of the coolant line sections (25, 25a) of the gripping sleeve (10, 18) engage, when the head part (9) is placed in position to effect a line connection ; and that the gripping sleeve (10), on the one hand, contains a guide slot (32) for the guide attachment (33), and, on the other hand, contains openings (35) for the engagement of locking means (36, 37) provided on the head part (9).

2. A handpiece according to Claim 1, characterised in that the guide attachment (33) is formed to taper towards its free end and/or the guide slot (32) which receives said attachment is formed to widen at the inlet end.

3. A handpiece according to Claim 1 or Claim 2, characterised in that the gripping sleeve (10) contains a guide socket (30) which itself contains a guide slot (32) and openings (35), and which is radially elastic and includes a collar (31) which engages into a correspondingly formed recess in the gripping sleeve (10) against which it abuts with radial initial tension and thus prevents the axial displacement of the guide socket (30).

4. A handpiece according to Claim 3, characterised in that in the gripping sleeve (10) a further sleeveshaped part (18) is supported so as to be resistant to rotation and contains the coolant line section (25, 25a) with the tube elements (26, 26a) which engage into the line channel (43) of the other coolant line section (34).

5. A dental handpiece according to Claim 4, characterised in that elastic pressure means (40) can be placed on the tube elements (26, 26a), which pressure means, in the engaged position, press the handpiece parts (9, 10) axially against a stop (63, 64) in order to ensure an exact positioning of the meshing (23, 24) of the drive connection of the drive shaft sections (5, 6) which can be coupled to one another on coupling of the two handpiece parts (9, 10).

6. A handpiece according to Claim 5, characterised in that the pressure means (40) also serves as sealing means.

7. A handpiece according to Claim 4, characterised in that the pressure means consists of a wire or the like, which runs transversely to the longitudinal direction of the guide attachment (33) but is elastic in the longitudinal direction, against which the end surface of the guide attachment (33) or parts thereof abut and which, in the engaged position, presses the handpiece parts (9, 10) axially against a stop (63, 64), in order to ensure an exact positioning of the meshing (23, 24) of the drive connection of the drive shaft sections (5, 6) which can be coupled to one another on coupling of the two handpiece parts (9, 10).

8. A handpiece according to one of Claims 1 to 7, characterised in that the head part (9) is provided with a radially elastic operating sleeve (38) to which there are attached lateral, axially parallel arms (37, 37a) which dip into the cylindrical guide (42) and elastically engage in the openings (35, 35a) of the handpiece sleeve (10) by means of detent noses (36, 36a) arranged at their free ends.

**Revendications**

1. Pièce à main de dentisterie comportant une partie de tête (9) servant à loger des éléments d'arbre d'entraînement (6, 7) servant à entraîner un outil devant être maintenu avec possibilité de rotation dans un logement (8) de la partie de tête, et un manchon de préhension (10) relié de façon détachable à la partie de tête (9) et comportant également au moins un élément d'arbre d'entraînement (4, 5), des éléments de canalisation (25, 25a ; 43, 43a) pour au moins un fluide de refroidissement dans les deux parties (9, 10) de la pièce à main, une liaison axiale à enfichage et des moyens d'étanchéité (40) entre les éléments (25, 25a ; 43, 43a) de canalisations pour les fluides de refroidissement, et un appendice de guidage (33) disposé sur une partie (9) de la pièce à main et s'étendant axialement et qui s'engage dans un guide en forme de fente (32) ménagé sur l'autre partie (10) de la pièce à main et qui forme une butée contre toute rotation des deux parties (9, 10) de la pièce à main, caractérisée par le fait que l'appendice de guidage (33) est disposé sur un tube cylindrique (41) de la partie de tête (9), qui s'engage dans un guide (42), qui lui est adapté, du manchon de préhension (10), que les canaux (43, 43a) des éléments (34) de canalisation pour les fluides de refroidissement de la partie de tête (9) sont intégrés dans l'appendice servant de guidage (33) et qui forment des douilles d'enfichage, dans lequelles des éléments tubulaires (26, 26a) des éléments (25, 25a) des canalisations pour les fluides de refroidissement du manchon de préhension (10, 18) s'engagent lors de l'enfichage de la partie de tête (9), dans le sens de l'établissement d'une liaison des canalisations, et que la poignée de préhension (10) comporte d'une part la fente de guidage (32) pour l'appendice de guidage (33) et d'autre part des évidements (35) pour l'engagement de moyens d'encliquetage (36, 37) disposés sur la partie de tête (9).

2. Pièce à main suivant la revendication 1, caractérisée par le fait que l'appendice de guidage (33) est réalisé avec une forme rétrécie en direction de son extrémité libre et que le guide en forme de fente (32), qui reçoit cet appendice, est réalisé avec une forme élargie au niveau de l'extrémité d'introduction.

3. Pièce à main suivant les revendications 1 ou 2, caractérisée par le fait que le manchon de préhension (10) contient une douille de guidage (30) comportant la fente de guidage (32) et les évidements (35) et qui est réalisée de manière à être radialement élastique et contient un collet (31) qui s'encliquète dans une gorge creusée autour, de forme correspondante, ménagée dans le manchon de préhension (10) et qui est appliquée sous l'action d'une précontrainte radiale et empêche ainsi un déplacement axial de la douille de guidage (30).

4. Pièce à main suivant la revendication 3, caractérisée par le fait que dans le manchon de préhension (10) se trouve montée, avec blocage en rotation, une autre partie en forme de manchon (18) qui contient l'élément (25, 25a) de canalisation pour un fluide de refroidissement ainsi que les tubulures (26, 26a) s'engageant dans le canal (43) de l'autre élément (34) de canalisation pour fluide de refroidissement.

5. Pièce à main de dentisterie suivant la revendication 4, caractérisée par le fait que sur les tubulures (26, 26a) il est possible de monter des moyens de pression élastiques (40) qui, dans la position d'engrènement, compriment les parties (9, 10) de la pièce à main axialement contre une butée (63, 64), de manière à garantir un positionnement précis de l'engrènement des dents (23, 24) de la liaison de transmission des éléments d'arbre d'entraînement (5, 6) pouvant être accouplés entre eux lors de l'accouplement des deux parties (9, 10) de la pièce à main.

6. Pièce à main suivant la revendication 5, caractérisée par le fait que les moyens de pression (40) sont également des moyens d'étanchéité.

7. Pièce à main suivant la revendication 4

caractérisée par le fait qu'il est prévu comme moyens de pression un fil ou analogue s'étendant transversalement par rapport à la direction longitudinale de l'appendice de guidage (33), mais élastique suivant cette direction longitudinale et contre lequel s'applique la face frontale de l'appendice de guidage (33) ou des parties de ce dernier et qui, dans la position d'engrènement, repousse les parties (9, 10) de la pièce à main axialement contre une butée (63, 64), de manière à garantir un positionnement précis de l'engrènement des dents (23, 24) de la liaison de transmission des éléments d'arbre d'entraînement (5, 6) pouvant être accouplés entre eux lors de l'accouplement des deux parties (9, 10) de la pièce à main.

8. Pièce à main suivant la revendication 7 caractérisée par le fait que sur la partie de tête (9) se trouve disposé un manchon de manœuvre (38) fournissant une élasticité radiale et sur lequel sont fixées des barrettes latérales (37, 37a) parallèles à l'axe et qui pénètrent dans le guide cylindrique (42) et s'engagent élastiquement, au moyen de becs d'encliquetage (36, 36a), disposés à leurs extrémités libres, dans les évidements (35, 35a) du manchon (10) de la pièce à main.

FIG 1

FIG 2